(19) Europäisches Patentamt
European Patent Office
Office européen des brevets

(11) Publication number: **0 301 718 A2**

# (12) EUROPEAN PATENT APPLICATION

(21) Application number: 88306167.3

(22) Date of filing: 06.07.88

(51) Int. Cl.⁴: C08G 18/50, C08G 18/10, C09D 3/49

(30) Priority: 27.07.87 US 78309
27.07.87 US 78314

(43) Date of publication of application:
01.02.89 Bulletin 89/05

(84) Designated Contracting States:
DE FR GB

(71) Applicant: TEXACO DEVELOPMENT CORPORATION
2000 Westchester Avenue
White Plains New York 10650(US)

(72) Inventor: Speranza, George Phillip
2000 Silverleaf Circle
Austin Texas 78757(US)
Inventor: Lin, Jiang-Jen
2617 Oak Meadow Drive
Round Rock Texas 78664(US)
Inventor: Cuscurida, Michael
3543 Greystone Drive
1056, Austin Texas 78731(US)

(74) Representative: Harrison, Michael Robert et al
Urquhart-Dykes & Lord 91 Wimpole Street
London W1M 8AH(GB)

## (54) Process for preparing novel diamines.

(57) Reaction products which contain as the principle reaction component, a diamine having the formula:

$$H_2N-\underset{R'}{\underset{|}{CH}}-CH_2[-O-CH_2-\underset{R'}{\underset{|}{CH}}]_x-NH_2$$

wherein R′ independently represents hydrogen or methyl and x is a number having an average value of at least 1 to about 60 and a diisocyanate of the formula:

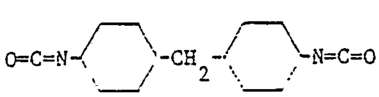

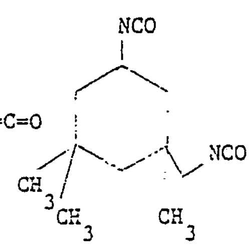

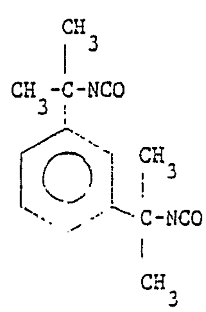

or $O=C=N-(CH_2)_6-N=C=O$

EP 0 301 718 A2

## PROCESS FOR PREPARING NOVEL DIAMINES

This invention relates to novel polyoxylalkylene diamine and isocyanate reaction products and methods of preparing such products.

The reaction of isocyanates with amines is known in the art and is an extremely fast reaction. It has only been recently that high molecular weight diamines could be made to react with diisocyanates in a controlled fashion. Work in this area led to the Reaction Injection Molding (RIM) process for the preparation of polyurea plastics.

In U.S. Patent No. 4,490,520, Orgasa et al. disclose a process for the preparation of a polyamide with improved properties which comprises polymerizing a lactam in contact with (1) an alkali catalyst and (2) a product obtained by the reaction between (a) a polyisocyanate (b) a polyoxyalkylene amine.

Kwong U.S. Patent No. 3,257,342 is directed to epoxy resins that are cured with an amidoamine prepared by reacting about two molar equivalents of a polyoxyalkylenediamine with an aliphatic dicarboxylic acid at high temperature. These products are amide-linked diamines in contrast to urea-linked diamines in this instant invention. The application of amidoamine in epoxy/polyamide coatings is described by V. Brytus in the Journal of Coatings Technology, Vol. 58, No. 740, September 1988 pp: 45-49.

In contrast to polyamide and polyurethane reactions, the formation of urea-linkages from isocyanates and amines is an extremely fast reaction. In general, prepolymer isocyanates or "blocked isocyanates" are used when polyureas are prepared. U.S. Patent No. 4,495,229 discloses a polyurethane, one component, heat-cured coating which is stable in storage and is hardened above a temperature of about 120°. The coating comprises a polyol and a blocked isocyanate.

Recent applications of this chemistry are reviewed in an article titled "Blocked Isocyanates in Coatings" by Mobay Chemical Corp., presented at "Water-Borne and Higher Solids Conference", February 5-7, 1986, New Orleans, Lousiana. There are areas of commercial interest where specific products based on blocked polyisocyanates exhibit possible uses, see "Journal of Coatings Technology", Vol. 58, No 738, July 1986, pp: 49-54.

The preparations and uses of prepolymers derived from the polyol and diisocyanate recaction are exemplified in U.S. Patents 4,617,349, 4,614,787 4,611,043, 4,490,254 and 4,605,504. In a related U.S. patent 4,609,718, an adduct of a polyoxyalkylene diamine having molecular weight of 2000 and diisocyanate at 1:2 molar ratio was used as a precursor for coating applications.

It would be a distinct advance in the art if a novel polyoxyalkylenediamine product containing urea groups or isocyanate groups could be prepared without the use of a metal catalyst wherein the hardness of such cured coatings was controllable. It would be advantageous to accomplish this without gel formation. In addition, it would be a desirable property of the diamine if it were colorless, and the process of preparing these amines could be carried out at low temperature. Uses of compositions with such desirable properties would be broad, expecially in coating applications described in this application.

According to the present invention there is provided a polyoxyalkylene diamine and isocyanate reaction product which has an average molecular weight of about 600 to 10,000, said product having been prepared by reacting diisocyanates with a polyoxyalkylene diamine in the presence of a polar solvent, the principal reaction product being formed by coupling each isocyanate group of said diisocyanate through an urea-linkage with a terminal primary amine of said diamine, wherein said diisocyanate reactant has the formula consisting of:

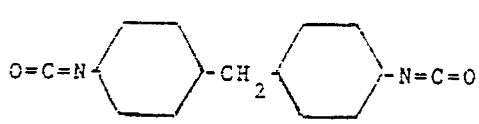

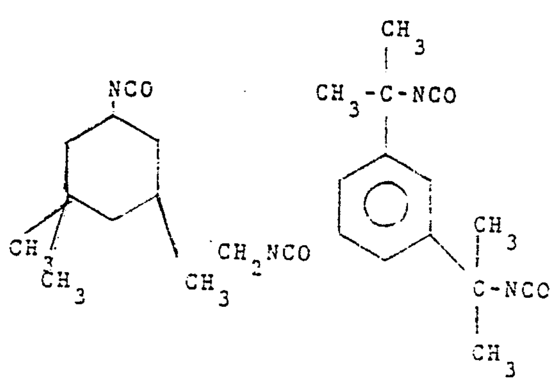

or $OCN-(CH_2)_6NCO$

and said polyoxalylene has the formula of:

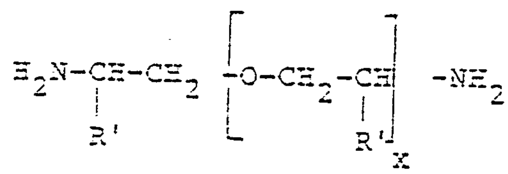

wherein R′ independently represents hydrogen, methyl or ethyl and x is a number having an average value of about 1 to about 60.

Additionally, there is provided a method which avoids gel formation.

## The Isocyanate

The isocyanate component for the present invention may be any suitable isocyanate having the desired functionality. Diisocyanates work well in the process. The organic diisocyanate is preferably an aliphatic isocyanate. Although diisocyanates are preferred, other higher polyisocyanates can be used in combination with diisocyanates and/or monisocyanates. Examples of suitable aliphatic diisocyanates are aliphatic diisoycanates such as 1,4-tetramethylene diisocyanate, trimethylhexane diisocyanate and 1,6-hexamethylene diisocyanate, 1,4-cyclohexyl diisocyanate, isophorone diisocyanate, xylylene diisocyanate, m- and p- tetramethylxylylene diisocyanate, 4,4′methylene-bis(cyclohexyl isocyanate), 2,2,4-trimethylhexamethylene diisocyanate, 2,4,4-trimethylhexamethylene diisocyanate and mixtures thereof. Substitued organic polyisocyanates can also be used in which the substituents are nitro, chloro, alkoxy and other groups which are not reactive with hydroxy groups or active hydrogens and provided the substituents do not adversely affect the intended use of the diamine.

Preferred diisocyanates for producing novel polyoxyalkleneamines, are isophorone diisocyanate, 1, 6-hexamethylene diisocyanate, 4,4 methylene bis(cyclohexylisocyanate), and tetramethylxylene diisocyanate. Isophorone diisocyanate was used in many of the examples.

## The Diamine Reactant

In general the diamine starting material may be defined as a polyoxyalkylene diamine. One group of appropriate polyoxyalkylene diamines that may be used are those sold by Texaco Chemical Co. as JEFFAMIN®- D-series products having the formula:

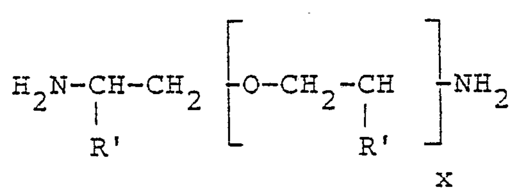

Wherein R′ independently represents hydrogen or methyl and x is a number having an average value of about 1 to about 60.

Representative polyoxypropylene diamines having this structure and which are sold by Texaco Chemical Co, are as follows:

JEFFAMINE® D-230 x = 2-3
JEFFAMINE® D-400 x = 5-6
JEFFAMINE® D-2000 x = ~ 33
JEFFAMINE® D-4000 x = ~ 60

The aforementioned JEFFAMINE[R] D-series amines appear to be well suited to both the embodiment for producing isocyanate terminated urea and the corresponding blocked isocyanate coatings.

Solvents

In the method of this invention the alcohol solvent is essential for controlling this reaction and, at the same time, avoiding gel formation.

Suitable solvents are those which are less reactive towards isocyanate groups than amino compounds. Generally suitable solvents are polar or those having a high dielectric constant.

Examples of suitable polar solvents include methanol, ethanol, isopropanol, butanol and amyl alcohol. Among the solvents studied were methanol, ethanol, i-propanol and t-butanol.

In the embodiment wherein the desired result is the production of isocyanate capped polyoxyalkylene urea the preferred solvents are t-butanol or i-propanol solvents.

Preferably the reaction products are formed by reacting diisocyanate with polyoxyalkylene diamine at a temperature within the range of about 0° to about 100° C and a reaction time of about 1 to about 12 hours.

In one preferred embodiment of the invention a polyoxyalkylenediamine having urea groups is obtained by means of a controllable reaction and without undesirable gel formation. The urea-linked polyoxyalkylene diamines are prepared using t-butanol or isopropanol solvents. The use of the alcohol solvent retarded the reaction rate of the diamines and diisocyanates and formed urea-linked diamines. The reaction occurred at room temperature and, the products are colorless. It is known that the reaction of isocyanates with amines is extremely fast. Only recently could higher molecular weight diamines be made to react with diisocyanates in a controlled fashion. The use of the alcohol solvent retards the reaction rate resulting in ungelled product. However, since alcohol will react with a diisocyanate, a hindered alcohol such as t-butanol or i-propanol is preferred. The higher reactive alcohol solvent such as methanol might cause the formation of urethane side products which are undesired.

The urea-linked polyoxyalkylene diamines are prepared by the reaction of polyoxyalkyleneamines and diisocyanates in the presence of alcohol solvents according to the following:

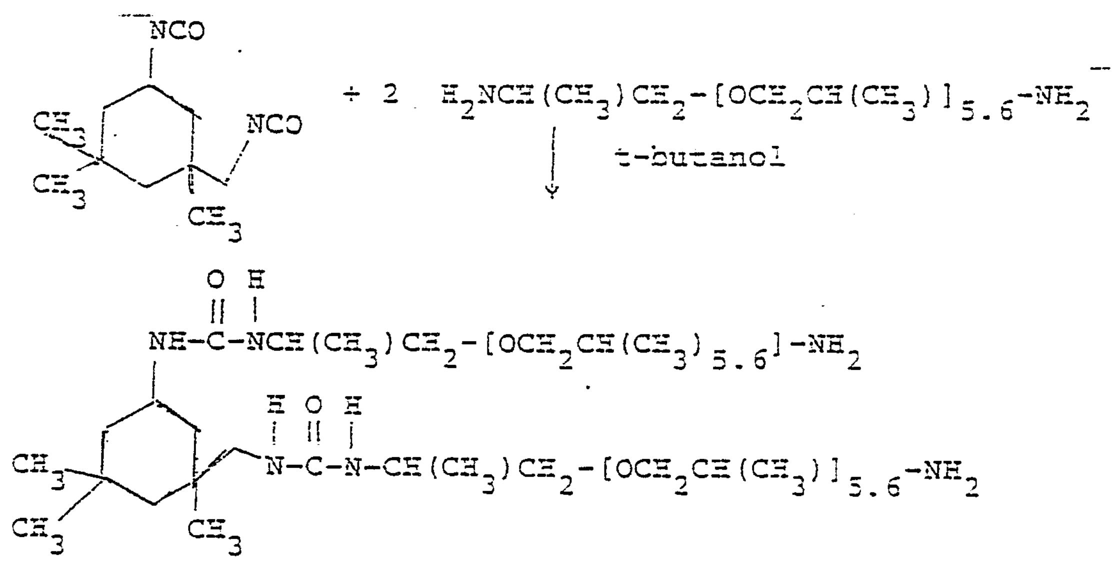


The novel diamine is preferably formed when a diisocyanate is reacted with an excess of polyoxyalkylene diamine under nitrogen atmosphere and at a temperature within the range of about 0° C to about 100° for a reaction time within the range of about 1 to about 10 hours. Normally, the reaction will go to completion after a reaction time within the range of about 1 to about 4 hours depending on how fast the heat of reaction can be removed.

The reaction is complete when essentially all the isocyanates have reacted with primary amine groups of the polyoxyalkylene diamine.

These diamines that are formed as described are liquid or amorphous solid materials having a molecular weight within the range of about 600 to about 10,000 and containing two terminal primary amine groups and an average of two urea functional groups.

The reaction mixture will comprise a diamine product which may be generally characterised by the following formula:

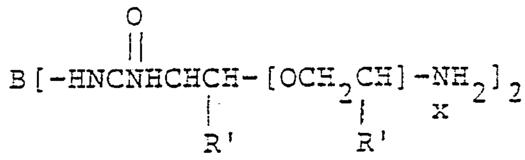

wherein R′ independently represents hydrogen or methyl, x is a number having an average value of about 1 to about 60, and

wherein B represents an alkyl group derived from alkyl diisocyanate, such as isophorone diisocyanate, m- and p-tetramethylxlylene diisocyanate and 1,6-hexamethylene diisocyanate etc. More particularly, B represents one of the following formulas:

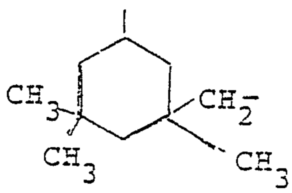

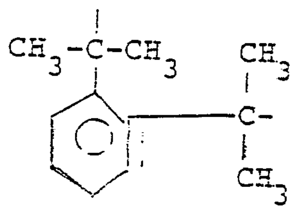

$(-CH_2-)_6$ ;

A variety of molecular configurations are possible for the diamines, depending on the starting materials.

Where isophorone diisocyanate (IPDI) and JEFFAMINE® D- 230, D-400, D-2000 or D-4000 are used as reactants, the products can be represented by the structure:

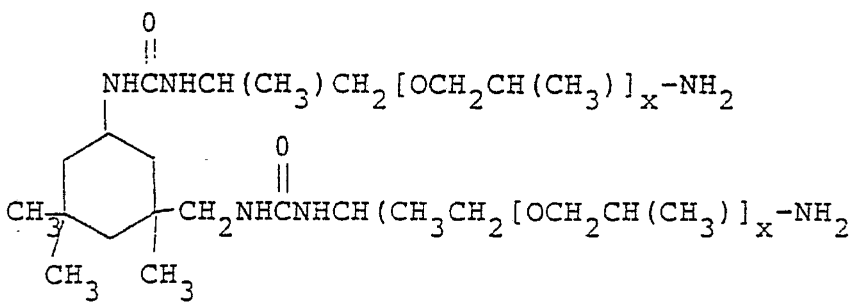

where x = 2 to 3 for JEFFAMINE® D-230
x = 5 to 6 for JEFFAMINE® D-400
x = ~33 for JEFFAMINE® D-2000
x = ~60 for JEFFAMINE® D-4000

The product resulting from the reaction of 1,6-hexamethylene diisocyanate and D-230, D-400, D-2000 or D-4000 can be represented by:

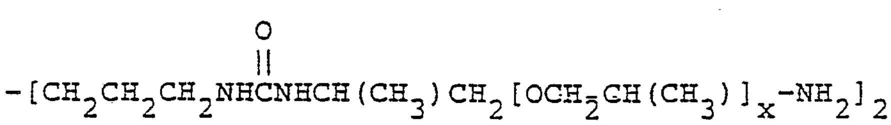

where x = 2 to 3 for D-230
x = 5 to 6 for D-400
x = ~33 for D-2000
x = ~60 for D-4000

The product resulting from the reaction of tetramethylxylene diisocyanate (TMXDI) and JEFFAMINE® D-400 can be represented by the following structure:

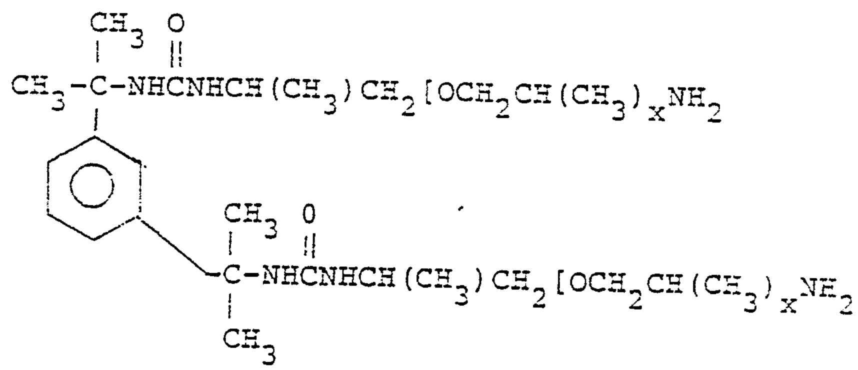

where x = 2 to 3 for D-230
x = 5 to 6 for D-400
x = ~33 for D-2000
x = ~60 for D-4000

In the embodiment of this invention wherein urea-linked diamines are formed, the use of t-butanol or i-propanol solvents retard the reaction rate of the polyoxyalkylene amines and diisocyanate and made it possible to prepare urea-linked diamines.

In another embodiment a polyoxyalkylene diamine molecule is formed which may comprise an isocyanate-capped polyoxyalkylenediamine or a blocked isocyanate. More specifically, there is provided a process for the preparation of a diisocyanate-prepolymer which comprises reacting a polyoxyalkylenediamine with an excess of an isocyanate in the presence of an alcohol solvent at room temperature and atmospheric pressure. In another embodiment certain alcohol solvents are used which retard the rate of reaction of the diamines and diisocyanates and form isocyanate capped polyoxyalkylenediamines. In another embodiment blocked isocyanates are prepared from isocyanate-terminated polyoxyalkylene prepolymers. The prepolymer may be blocked with methyl ethyl ketone oxime or other blocking agents and heat cured with conventional polyamines. The blocked isocyanate coating systems had excellent storage stability and the heat cured film had excellent properties.

In one preferred embodiment isocyanate capped diamines are prepared using t-butanol or isopropanol solvents. In this embodiment the use of the alcohol solvent retarded the reaction rate of the diamines and diisocyanates and formed isocyanate capped diamines. In another embodiment isocyanate-terminated polyoxyalkylene prepolymers were made by a similar reaction and blocked with methyl ethyl ketone oxime or other blocking agents and heat cured with conventional polyamines. The reaction is very rapid at room temperature. The products are colorless.

The novel isocyanate prepolymers are urea-linked polyoxyalkylene isocyanates which contain as the principle reaction components diisocyanates as described and an appropriate diamine having the formula:

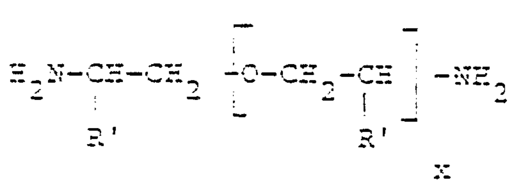

wherein R′ independently represents hydrogen or methyl and x is a number having an average value of about 1 to 60.

In the embodiment where isocyanate capped polyoxyalkylene ureas are produced, the use of t-butanol or i-propanol as solvents made it possible to prepare isocyanate capped polyoxyalkylene diamines. The following structures demonstrate capped products formed by reaction of JEFFAMINE® D-400 and the appropriate isocyanate.
e.g.

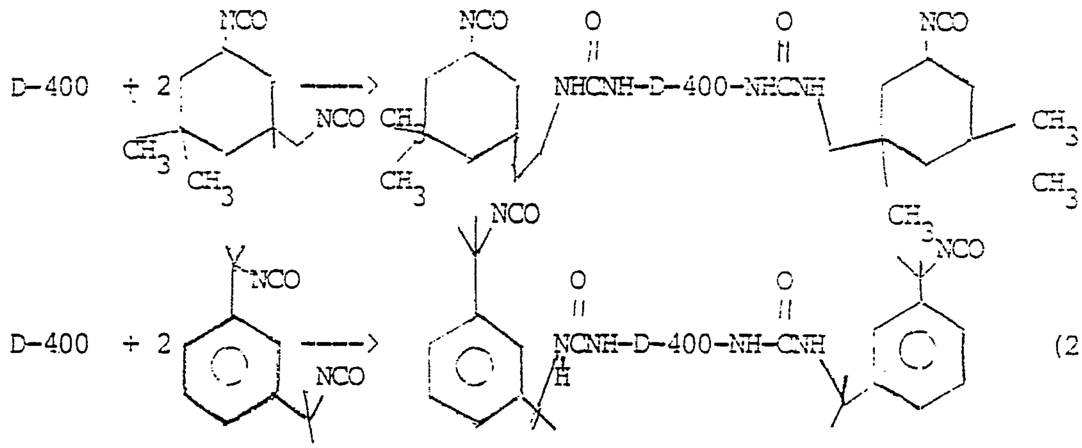

(2)

D-400 + 2 $OCN(CH_2)_6NCO$ ---->

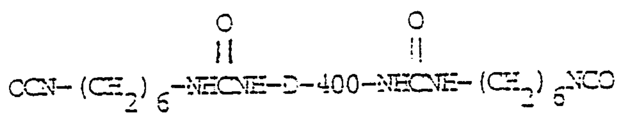

(3)

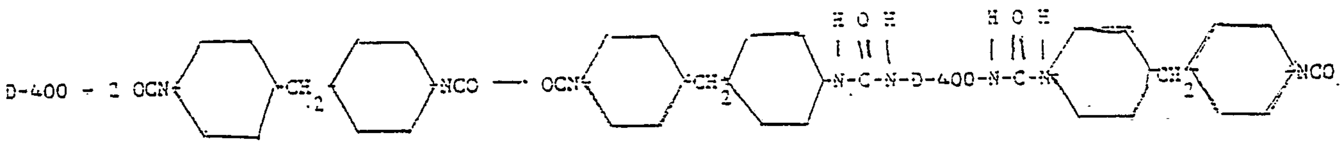

(4)

The isocyanate-terminated polyoxyalkyleneamine prepolymer may be blocked with methyl ethyl ketone oxime or other blocking agents and heat cured with conventional polyamines. The isocyanate blocked coatings can also be cured with novel polyoxyalkyleneamines to provide a coating system with improved stability. In addition, the hardness of the coating can be varied by changing the diisocyanate.

For the production of isocyanate capped polyoxyalkylene urea the preferred solvents are t-butanol or i-propanol solvents.

An isocyanate-capped polyoxyalkylene urea product is preferentially formed when an excess diisocyanate is reacted with a polyoxyalkylene diamine under nitrogen atmosphere at a temperature within the range of about 0 °C to 100 °C for a reaction time within the range of about 1 to about 10 hours. Normally, the reaction will go to completion after a reaction time within the range of about 1 to about 4 hours.

The use of t-butanol or i-propanol solvents retard the reaction rate of the polyoxyalkylene amines and diisocyanate and make it possible to prepare isocyanate capped JEFFAMINE[R] Diamines according to the following reaction:

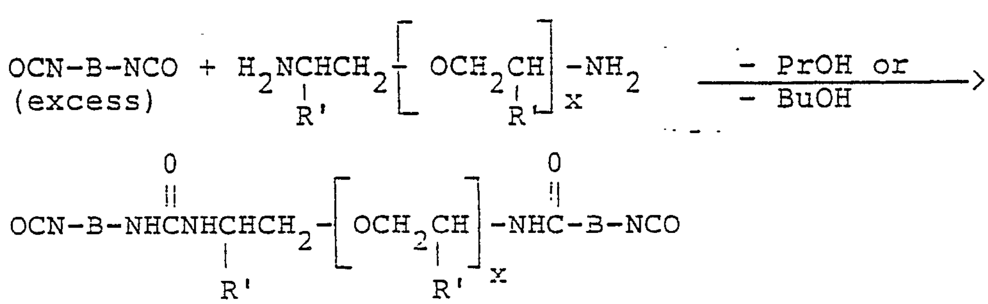


Wherein R′ independently represents hydrogen or methyl or ethyl, x is a number having an average

value of about 1 to about 60 and B represents the nucleus of an alkyl diisocyanate; for example, structures A, B, and C illustrate a nucleus from isophorone diisocyanate, m-tetramethyl xylene diisocyanate or 1, 6-hexamethylene diisocyanate respectively.

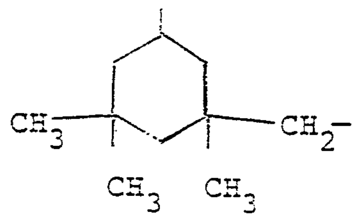

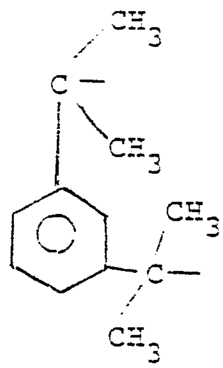

$-(CH_2)_6-$

A B C

In the embodiment of this invention wherein blocked isocyanates are prepared from isocyanate terminated polyoxyalkyleneamine prepolymers,the prepolymers are prepared in the manner described previously by the reaction of an excess of diisocyanate with a polyoxyalkyleneamine in an alcohol solvent. The prepolymer can be blocked with conventional blocking agents such as methyl ethyl ketone oxime.

Isocyanate-terminated polyoxyalkyleneamine prepolymers were made by reaction of an excess of the diisocyanate with the polyoxyalkyleneamine in an equivalent ratio of about 2-4 in alcohol solvent as illustrated by the following equation, using TMXDI and JEFFAMINE® D-400 as an example:

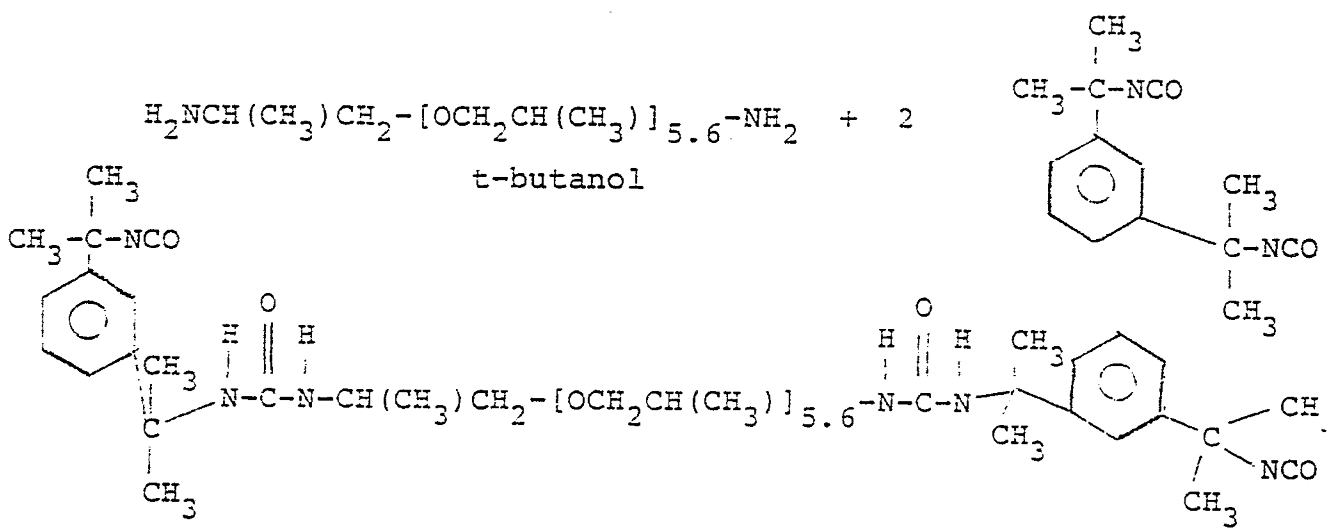


The isocyanate-terminated polyoxyalkyleneamine prepolymer may be blocked with methyl ethyl ketone oxime or other blocking agents. Useful isocyanate blocking agents include, for example, phenols, amides, malonates, acetoacetates and sodium bisulfite. The blocked isocyanates can be heat cured with polyamines.

The improvements of this system over similar work in the art include the following:

1. Aliphatic isocyanates are used to make non-gelled products.
2. No catalysts are required.
3. Coating systems have excellent stability.

As mentioned above the blocked isocyanates can be heat cured with conventional polyoxyalkyleneamines.

In a variation of the embodiment novel polyoxyalkyleneamines can be used as the curing agent to make coatings, wherein the hardness of the coating may be varied by changing the diisocyanate used in the

novel polyoxyalkyleneamines. The novel urea-linked polyoxyalkyleneamines are prepared by reacting polyoxyalkylenediamines with diisocyantes in the presence of an alcohol solvent according to the following equation:

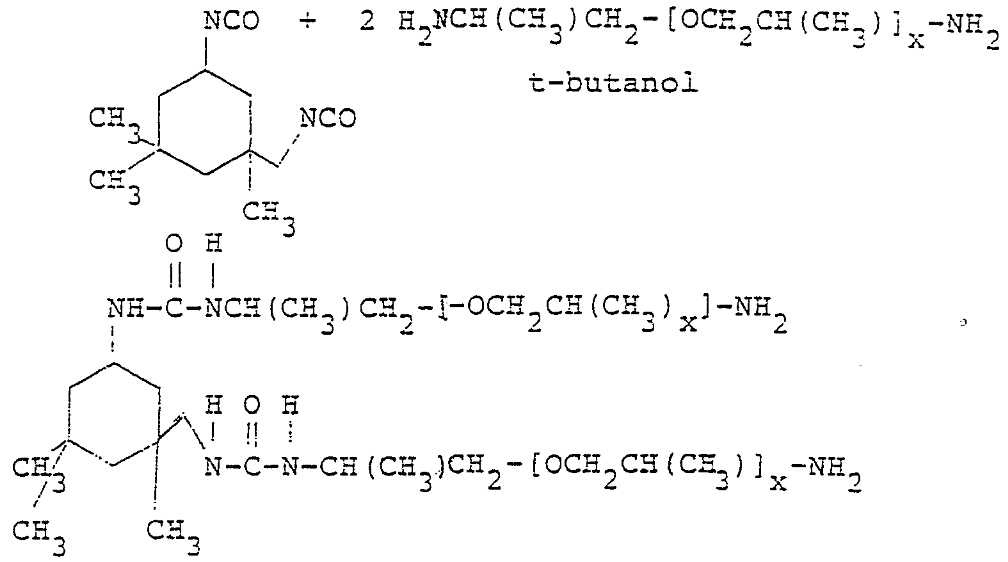


The diisocyanate used included tetramethylxylene diisocyanate and hexamethylenediisocyanate.

Other polyoxyalkyleneamines which could be used include JEFFAMINE® D-230, D-400, D-2000 and D-4000. Additionally, this system exhibits the following improvements over the art;

1. Utilizes aliphatic isocyanates to introduce alkyl and urea funtionalities into polyoxyalkylene diamine.
2. Coating hardness can be varied by simply changing the diisocyanate and the nature of polyoxyalkylene diamine.
3. Improved compatibility of isocyanate coating systems.
4. Low reaction temperature
5. Colorless products.
6. Variety of liquid or solid products.

The present invention will be further illustrated by the following examples which are only for the purpose of illustration and are not to be regarded as limiting the invention in any way.

## COMPARATIVE EXAMPLE 1

This example demonstrates the reaction of a polyoxyalkylenediamine and a diisocyanate in the presence of water rather than alcohol.

To a pint wide-mouth jar equipped with a magnetic stirrer was added 300 ml of water and 20.7g of JEFFAMINE ED-600 amine. This latter is a water-soluble polyether diamine with the structure:

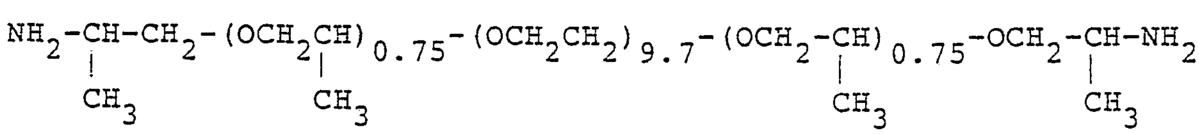

Isonate 143 is a modified methylene diphenyl diisocyanate sold by Dow Chemical. Thanol SF-5505 is a 5500 molecular weight polyoxypropylene triol sold by Texaco Chemical Co.

After adding the JEFFAMINE® ED-600, 21.6g of an isocyanate prepolymer (e.w. of 315) prepared from Isonate 143-L and THANOL® SF-5505 polyol was added.

$$O[-(CH_2CH_2O)_x(CH_2\overset{CH_3}{\overset{|}{C}}HO)_y-(CH_2\overset{CH_3}{\overset{|}{C}}H-NH_2)]_2$$

Where $x = 4.35$ and $y = 0.75$

The ratio of amine to polyol was 2:1. Polymer formed immediately and the white solid mass filled the jar. The product weighed 31g. It darkened at 270° C but still maintained its integrity at 300° C. The experiment above was repeated except that there was no stirring. The isocyanate prepolymer settled to the bottom with no reaction. When the mixture was stirred with a tongue depressor a white blob formed around the wooden stirrer. The weight of the polymer finally formed was 27g with most of the amine remaining in the water. The same prepolymer was allowed to react with other di- and triamines in water. Amines included were ED-2001, white homogeneous dispersion; D-400, tough non-sticky ball; ED-900, white solid; D-230, white solid; T-403, slow reaction because isocyanate is coated with amine; ET-1000, ET-3000, T-5000 and no amine. In every case there was not enough solid polymer collected to account for the starting material. It appears much of the isocyanate was reacting with water instead of the amine.

## EXAMPLE 2

### Isophorone Diisocyanate (IPDI) and JEFFAMINE® D-400 in Isopropanol (at 1:2 molar ratio)

A 250 ml 3-necked flask equipped with a thermometer, mechanical stirrer, additional funnel and nitrogen inlet line was charged with JEFFAMINE® D-400 (80g, 0.20M). The mixture of IPDI (22.2g, 0.10M) and isopropanol (22.2g) solvent was added dropwise through the additional funnel. An exothermic reaction was observed with the temperature rising to 42° C (maximum temperature). The addition was over a 1.5 hour period of time while maintaining the temperature around 30° C. The product was clear and colorless. The IR analysis indicated urea formation. The amine titrations showed 1.53 meq/g (theoretical 1.60 meq/g).

## EXAMPLE 3

### Same except using EtOH instead of i-PrOH

The experiment above was repeated. The resulting product was a colorless, clear solution with IR analysis showing urea bonds and amine analysis showing 1.52 meq/g.

## EXAMPLE 4

### IPDI + JEFFAMINE® D-400 (1:2)

A mixture of JEFFAMINE® D-400 (160g, 0.40m) and i-PrOH (120) was charged into a flask. Isophorone diisocyanate (44.4g, 0.20) was added dropwise at 20-25° C over a 1 hour period of time. The solvent in the product solution was removed by using a high vacuum. The resulting product was a colorless semisolid at room temperature. The analysis of amine indicated 1.59 meq/g.

EXAMPLE 5

IPDI + JEFFAMINE® D-400 (1:2)

The mixture of D-400 (160g, 0.40), i-PrOH (80g) and Cellosolve acetate (80g) was placed in a flask. Isophorone diisocyanate, (44.4g 0.20M) was added dropwise into the amine mixture at 20-25 °C in about 1 hour. After reaction, solvent was stripped under vacuum. The resulting viscous, colorless liquid (213g) was analyzed to be 1.44 meq/g amine content.

EXAMPLE 6

The above experimental procedures were repeated except using methanol as the solvent (22.2g). The mixture of IPDI (22.2g, 0.10M) and MeOH (22.2g) was added to D-400 (80g, 0.20M) dropwise at 30 °C over a 2 hour period. The resulting clear, colorless solution was analyzed to have an amine content of 1.81 meq/g (theoretical 1.61 meq/g). Note: The higher content of amine in the sample indicated some reaction of methanol solvent with IPDI.

EXAMPLE 7 (Comparative)

Dimethyl carbonate solvent

Into a 250 ml 3-necked flask equipped with a thermometer, additional funnel, stirrer and nitrogen-inlet line was charged D-400 (80g, 0.20M). The mixture of IPDI (22.2g 0.10M) and dimethyl carbonate was dropped into the reactor over a 2 hour reaction period. Fast gel formation was observed. This example showed dimethyl carbonate is not a suitable solvent for the reaction.

EXAMPLE 8 (Comparative)

Methyl t-butyl ether solvent

The same experimental procedures were employed except using methyl t-butyl ether as solvent. The results indicated fast gel formation and that methyl t-butyl ether solvent is not suitable for this isocyanate-amine reaction.

EXAMPLE 9 (Comparative)

No solvent

The same experimental procedures were employed except using no solvent but IPDI (22.2g, 0.10M) and D-400 (80g, 0.20M). The reaction was uncontrollably fast.

## EXAMPLE 10

t-butyl alcohol as solvent

Into a 500 ml 3-necked flask equipped with a thermometer, stirrer, additional funnel and nitrogen-inlet line, was charged D-400 (160g, 0.40M). The mixture of IPDI (44.4g, 0.20M) and t-butyl alcohol (88.8g) was added dropwise over a 2 hour period of time. The reaction temperature was 26-24 °C. A clear colorless solution was obtained with amine analysis of 1.56 meq/g (calc. 1.37 meq/g).

## EXAMPLE 11

IPDI + JEFFAMINE® D-4000

Into a 500 ml 3-necked flask equipped with a thermometer, stirrer, additional funnel and nitrogen-inlet line, was charged D-4000 (200g, 0.05M). A mixture of IPDI (5.6g 0.025M) in t-BuOH (11.1g) was added dropwise at 24-36 °C over one hour and the product allowed to stand overnight. A colorless viscous liquid was obtained. The IR analysis indicated the presence of a urea bond. The amine titration showed 0.15 meq/g. The viscosity was 12,681 cs/100 °F.

## EXAMPLE 12

IPDI + JEFFAMINE® D-2000 (1:2 molar ratio)

Into a 500ml 3-necked flask equipped with a thermometer, additional funnel, stirrer and nitrogen-line, was charged D-2000 (200g, 0.1M). Then a mixture of isophorone diisocyanate (11.1g, 0.05M) in t-BuOH (22.2g) was added dropwise over a 1.5 hour time period. The product, after standing overnight, was a viscous, colorless liquid. The analysis indicated the following: amine 0.39 meq/g, acidity 0.03 meq/g, isocyanate <0.001 meq/g.

## EXAMPLE 13

IPDI + JEFFAMINE® D-230 (1:2)

Into a 250 ml 3-necked flask equipped with a thermometer, stirrer, additional funnel and nitrogen-line was charged D-230 (46g, 0.2M) and i-PrOH (46g). Then the mixture of IPDI (22.2g, 0.10M) in i-PrOH (22.2g) was added dropwise over one hour at 25-30 °C pot temperature. The clear, viscous product solution had the following analysis: amine content 1.37 meq/g (calc. 1.47 meq/g).

## EXAMPLE 14

IPDI + JEFFAMINE® D-230 (1:2)

The same experimental procedures were repeated. A mixture of IPDI (22.2g, 0.10M) in i-PrOH (11.2g) was added into the solution of D-230 (46g, 0.20M) in i-PrOH (23g) dropwise at 25-30 °C over a 2 hour reaction time. Analysis of the product solution showed 1.93 meq/g for amine (calc. 1.95 meq/g).

EXAMPLE 15

IPDI + JEFFAMINE® D-230 (1:2)

The same experimental procedures were repeated. A mixture of IPDI (22.2g, 0.10M) in i-PrOH (11.2g) was added into the solution of D-230 (46g, 0.20M) in i-PrOH (18g) and water (5g) over a 3 hour period at 20-30 °C. The resulting product solution was analyzed to be 1.88 meq/g for amine (calc. 1.95 meq/g).

EXAMPLE 16

1,6-hexamethylene diisocyanate + JEFFAMINE® D-400 (1:2 molar ratio)

A 500 ml 3-necked flask equipped with thermometer, stirrer, additional funnel and nitrogen-line, was charged with D-400 (150g, 0.375M), i-PrOH (75g) and Cellosolve acetate (75g). The mixture was cooled to 5 °C by ice-water bath. Then 1,6-hexamethyl diisocyanate (28g, 0.19M) was dropped into the flask an hour with stirring. The portion of solvent was removed under vacuum to obtain a colorless, opaque solid which contained amine 1.28 meq/g (theoretical 1.3 meq/g).

EXAMPLE 17

TMXDI + JEFFAMINE® D-400 (1:2)

Using similar experimental procedures, tetramethylxylene diisocyanate (91.5g) was dropped slowly into the mixture of D-400 (300g), i-PrOH (150g) and Cellosolve acetate (150g) at 10-20 °C pot temperature over a 2 hour period. A portion of the solvent was stripped off under vacuum to obtain 611g product solution, containing amine 1.05 meq/g.

EXAMPLE 18

TMXDI + JEFFAMINE® D-400 (1:2)

A 500 ml 3-necked flask equipped with thermometer, stirrer, additional funnel, and nitrogen line, was charged with D-400 (120g, 0.3M) and i-PrOH (60g). Tetramethylxylene diisocyanate (36.6g, 0.15M) was added dropwise over a 2 hour reaction time at 5-22 °C. The product solution was a colorless liquid, containing amine 1.22 meq/g (calc. 1.39 meq/g), (212g).

## EXAMPLE 19

Usage example (for expoxy applications)

A portion of product from Example 18 (54g) was subjected to a vacuum desicator to remove isopropanol. At room temperature, the amine product was mixed well with Epon 828 (Shell, 28g), and poured into a mold and cured at 80° C overnight. A rubbery, light colored transparent material was made.

## EXAMPLE 20

This example will illustrate the preparation of the blocked isocyanate used in this invention.

Into a 2-liter 3-necked flask equipped with a stirrer, thermometer, nitrogen source, dropping funnel, and water condenser were charged 800g of a toluene diisocyanate adduct of trimethylolpropane dissolved in propylene glycol monomethyl ether acetate (Mondur CB-601 PMA; Mobay Chemical Co.). The isocyanate adduct had an isocyanate content of 10.5% (e.w. 400). Methyl ethyl ketone oxime (178g) was then added dropwise over a 1-hour period. The reaction temperature peaked at 68° C at the end of the methyl ethyl ketone oxime addition. The reaction mixture was then stirred 1.25 hours without additional heating. Ethylene glycol monoethyl ether acetate (108.7g) was then used to dilute the blocked isocyanate. The infrared spectra of the product showed only a very small isocyanate band at 2480 cm-1.

## EXAMPLE 21

This example will illustrate the preparation of a heat cured coating using the JEFFAMINE® D-400 isophorone diisocyanate adduct of Example 5 as the curing agent for the blocked isocyanate of Example 20.

Into a one-half pint wide-mouthed bottle was charged 70.2g of the blocked isocyanate of Example 20 and 99.4g of the JEFFAMINE® D-400 isophorone diisocyanate adduct of Example 5. The mixture was then thoroughly mixed using a wooden spatula. A portion of this mixture was then degassed on a rotary film evaporator.

Five mil films were prepared from the degassed mixture using a doctor blade. The films were then cured 1 hour at 100-105° C. The cured films had a pencil hardness of H and a forward and reverse impact resistance of greater than 160 in/lb.

## EXAMPLE 22

Using the general procedure of Example 20, blocked isocyanate coatings were prepared using the JEFFAMINE® D-400 diisocyanate adducts of Examples 16 and 17 as the curing agent.

| Coating No. | Sample 1 | Sample 2 |
|---|---|---|
| Composition, pbw | | |
| Blocked isocyanate of Example 20 | 51 | 57.8 |
| JEFFAMINE® D-400-tetramethylxylene diisocyanate of Example 17 | 99 | - |
| JEFFAMINE® D-400-hexamethylene diisocyanate adduct of Ex. 16 | - | 92.2 |
| Film Properties | | |
| Film thickness, mil | 5 | 5 |
| Cure temperature, °C | 100-105 | 100-105 |
| Cure time, hr. | 2 | 2 |
| Pencil hardness | B-HB | H-2H |
| Impact resistance, in/lb | | |
| Forward | Pass 160 | Pass 160 |
| Reverse | Pass 160 | Pass 160 |

## EXAMPLE 23

This example will show the improved storage stability of the blocked isocyanate compositions of this invention as compared to those which utilize conventional polyoxyalkyleneamines (JEFFAMINE® D-400).

Compositions and storage stability data are shown in the following table:

| Sample No. | Sample 1 | Sample 2 |
|---|---|---|
| Composition, pbw | | |
| Blocked isocyanate of Ex. 21 | 51 | 106.5 |
| JEFFAMINE® D-400-tetramethylxylene adduct of Example 17 | 99 | - |
| JEFFAMINE® D-400 | - | 43.5 |
| Storage Stability | | |
| Viscosity, 77°F, cps (days) | 660(1)<br>1600(8)<br>2950(14)<br>9940(30) | 1700(1)<br>8500(8)<br>24250(14)<br>1448000(30) |

## Example 24

### Isophorone Diisocyanate (IPDI) and JEFFAMINE® D-2000 (2:1) Adduct

To a 500 ml 3-necked flask equipped with a thermometer, additional funnel, stirrer and nitrogen-inlet line, was charged isophorone diisocyanate (44.4g 0.20M) and t-BuOH (44.4g).

The mixture of D-2000 (200g 0.1M) in t-BuOH (50g) was added dropwise at 21-33° C over a two hour period of time. The colorless, viscous product was analyzed for isocyanate content and it was found to be 0.49 meq/g (calc. 0.59 meq/g).

EXAMPLE 25

1.6-Hexamethylene Diisocyanate and D-2000 (2:1) Adduct

To a 500 ml 3-necked flask equipped with thermometer, addition funnel, stirrer and nitrogen-inlet line, was charged 1,6-hexamethylene diisocyanate (Mobay, Desmodur H, 29.6g, 0.2M). At 8-20 °C temperature (cooling by wet-ice bath), the mixture of D-2000 (200g, 0.1M) and t-BuOH (150g) was added into the flask dropwise through an additional funnel, over a four hour period of time. A clear solution was obtained. After standing at room temperature overnight, the solution turned into a soft solid with an analysis for isocyanate of 0.81 meq/g.

EXAMPLE 26

m-tetramethyl xylene diisocyanate (TMXDI) + D-2000 (2:1) Adduct

Following the above procedures, the mixture of JEFFAMINE® D-2000 (150g, 0.075M) and t-BuOH (200g) was added to tetramethylxylene diisocyanate (36.6g, 0.15M) dropwise at 5-15 °C. The resulting viscous, colorless solution was analyzed to contain 0.68 meq/g for isocyanate.

EXAMPLE 27

TMXDI and JEFFAMINE® D-400 (2:1) Adduct

Following the above procedures, the mixture of JEFFAMINE® D-400 (100g 0.25M) and t-BuOH (100g) was added to tetramethylxylene diisocyanate (122g, 0.5M) at 5-17 °C. The resulting colorless, viscous solution was analyzed to contain 1.31 meq/g isocyanate.

EXAMPLE 28

IPDI and JEFFAMINE® D-400 (2:1) Adduct

Following the typical experimental procedures, the mixtures of D-400 (42g, 0.105M) and t-BuOH (90g) were added to isophorone diisocyanate (46.6g, 0.21M) at 17-25 °C over a 1 hour period. The resulting colorless solution was subjected to a vacuum line to recover solvent. The isocyanate D-400 adduct was obtained as semisolid.

Examples 6 through 10 illustrate the method of preparing novel blocked isocyanates.

EXAMPLE 29

Preparation of the Blocked Isocyanate

Into a 500 ml 3-necked flask equipped with a stirrer, thermometer, dropping funnel, nitrogen source, and water condenser was charged 122g (0.5M) of tetramethylxylene diisocyanate. The diisocyanate was then cooled to 9° C and a mixture of 100g (0.25M) JEFFAMINE® D-400 and 100g t-butanol was added dropwise over a 2.25 hour period. The reaction temperature was maintained at 9-18° C during this period. After a 10 minute digestion, methyl ethyl ketone oxime (43.5g, 0.5M) was added dropwise over a 0.4 hour period. The reaction temperature peaked at 40° C and heating was continued for an additional 2.5 hours at 40-55° C. The resultant product was a clear, viscous liquid which contained no free isocyanate as determined by its infrared spectra.

EXAMPLE 30

This example will illustrate the preparation of heat cured coatings using the blocked isocyanate of Example 6 and JEFFAMINE® T-403 as the curing agent. It will further show the improved properties of these coatings as compared to those made from prior art blocked isocyanates. In other work in the art a blocked isocyanate was made by the reaction of methyl ethyl ketone oxime, with a toluene diisocyanate adduct of trimethylolpropane dissolved in propylene glycol monomethyl ether acetate (Mondur CB-601 PMA; Mobay Chemical Co).

Coatings were prepared as follows:

Into a one-half pint wide-mouthed bottle was charged the appropriate blocked isocyanate, curing agent. A flow control agent such as beetle resin was an alternate additive. The mixture was then thoroughly mixed using a wooden spatula. A portion of the mixture was then degassed using a rotary film evaporator. Five mil films were prepared from the degassed mixture using a doctor blade. The film was then heat cured.

Compositions, details of preparation, and coating properties are shown in the following table:

| Coating No. | Sample 1 | Sample 2 |
|---|---|---|
| Composition, pbw | | |
| Blocked isocyanate of Example 6 | 123 | - |
| Prior art blocked aromatic diisocyanate | - | 106.5 |
| JEFFAMINE® D-400 | - | 43.5 |
| JEFFAMINE® T-403 | 27 | - |
| Beetle resin | 0.075 | - |
| Ethylene glycol monoethyl ether acetate | 25 | - |
| Details of Preparation | | |
| Coating thickness, mil | 5 | 5 |
| Cure temperature, °C (hr) | 100-105(2) | 100-105(2) |
| Properties | | |
| Pencil hardness | H | H |
| Impact resistance, in/lb | | |
| Forward | Pass 160 | Pass 160 |
| Reverse | Pass 160 | Pass 160 |
| Gloss (hrs. exposure to ultra-violet light in QUV tester) | | |
| 24 | 100.1 | 99.2 (yellowed) |
| 96 | 103.2 | 101.6 |
| 118 | 100.1 | 102.3 |
| 308 | 104.1 | 100.8 |
| 497 | 95 (non-yellowing | 89 (dark yellow) |

EXAMPLE 31

This example will show the improved-storage stability of the blocked isocyanate coating systems of this invention as compared to prior art blocked isocyanate systems.

| Storage Stability | Coating System from Example 7 | Coating System of Example 7 |
|---|---|---|
| Vis., 77°F, cps | 800 (1) | 1700 (1) |
| | 900 (14) | 8500 (8) |
| | 1000 (24) | 69400 (23) |
| | 1150 (31) | 1448000 (30) |
| | 1500 (63) | |
| | 2000 (91) | |
| | 5773 (210) | |

EXAMPLE 32

This example will illustrate the preparation of blocked isocyanates by reaction in alcohol solvent of an isocyanate-terminated prepolymer of isophorone diisocyanate and a 600 m.w. poly-(oxyethyleneoxypropylene)amine (JEFFAMINE® ED-600 with methyl ethyl ketone oxime).

Into a 1-liter 3-necked flask equipped with a stirrer, thermometer, nitrogen source, and addition funnel was charged 222g (1M) isophorone diisocyanate and 100g isopropyl alcohol. The mixture was then cooled to 6°C. A solution of 322.5g (0.5M) JEFFAMINE® ED-600 and 150g isopropyl alcohol was then added over a 30 minute period keeping the reaction temperature at 6-18°C. Methyl ethyl ketone oxime (87g) was then added as rapidly as possible maintaining the reaction temperature at 30-35°C. The reaction mixture was then digested for 1.5 hours. The final product was a clear, colorless, low viscosity liquid.

EXAMPLE 33

Heat cured coatings were prepared using the blocked isocyanate described in Example 9 and JEFFAMINE® T-403.

Compositions, details of preparation, and coating properties are shown in the following table.

Coating No.

Composition, pbw

| | |
|---|---|
| Blocked isocyanate of Example .9 | 130.35 |
| JEFFAMINE® T-403 | 19.65 |
| Beetle resin | 0.075 |

Details of Preparation

| | |
|---|---|
| Coating thickness, mil | 5 |
| Cure temperature, °C | 100-110(2) |
| 120-125(1) | |
| Pencil hardness | 3B |
| Impact Resistance, in/lb | |
| Forward | Pass 160 |
| Reverse | Pass 160 |

## Claims

1. A polyoxyalkylene diamine and isocyanate reaction product characterised in that it has an average molecular weight of about 600 to 10,000, said product having been prepared by reacting a diisocyanate with a polyoxyalkylene diamine in the presence of a polar solvent, the principal reaction product being formed by coupling each isocyanate group of said diisocyanate through a urea-linkage with a terminal primary amine of said diamine, wherein said diisocyanate reactant has the formula consisting of:

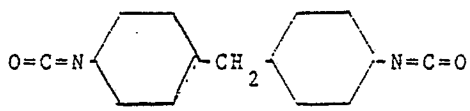
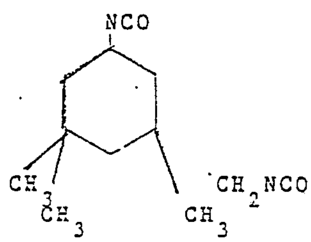
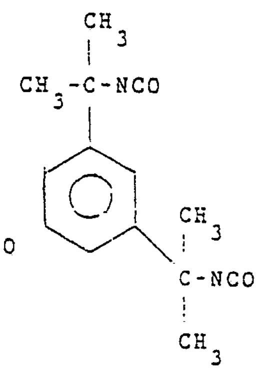
or $OCN-(CH_2)_6NCO$

and said polyoxyalkylene has the formula:

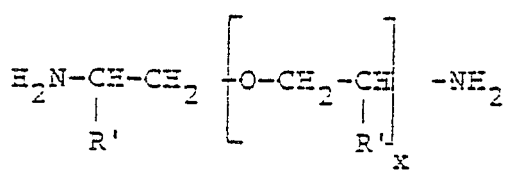

wherein R′ independently represents hydrogen, methyl or ether and x is a number having an average value of about 1 to about 60.

2. A product according to claim 1 characterised in that the polar solvent is isopropanol, t-butanol, methanol, ethanol or amyl alcohol.

3. A product according to claim 1 or claim 2 characterised in that the diisocyanate reactant is isophorone diisocyanate (IPDI), 1,6-hexamethylene diisocyanate (HMDI) or tetramethylxylene diisocyanate (TMXDI).

4. A product according to any of the preceding claims characterised in that the polyoxyalkylene diamines reactants have molecular weights of from 200 to 4000.

5. A product according to any of the preceding claims characterised in that the polyoxyalkylene diamines are polypropylene diamines of the formula:

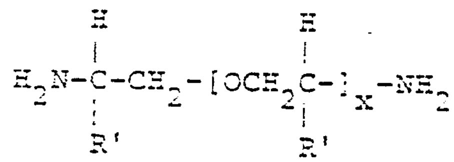

where x = 1 to 60

6. A method of preparing a reaction product as claimed in any of the preceding claims characterised in that it comprises reacting a diisocyanate with a polyoxyalkylene at a temperature within the range of about 0 °C to about 100 °C and a reaction time of about 1 to about 12 hours.

7. A reaction product according to any of claims 1 to claims 5 characterised in that it contains an average of two terminal primary amine groups and is prepared by reacting the diisocyanate with an excess of the polyoxyalkylene diamine, said reaction product having the formula:

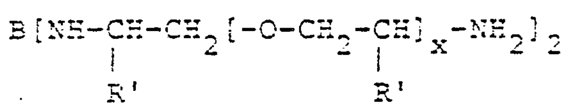

wherein R′ is hydrogen or methyl, x is a number having an average value of about 1 to 60, and wherein B represents an alkyl from a diisocyanate nucleus structure.

8. A product according to claim 7 characterised in that said polyoxyalkylene diamine and said diisocyanate are allowed to react with each other at a 2:1 molar ratio.

9. A method of preparing an reaction product according to claim 7 or claim 8 characterised in that it comprises reacting a diisocyanate with at least 2 mole equivalents of polyoxyalkylene diamine.

10. A product according to any of claims 1 to claims 5 characterised in that it contains an average of 2 terminal isocyanate groups and that is prepared by reacting an excess of diisocyanate with an polyoxyalkylene, the isocyanate prepolymer reaction product having the formula:

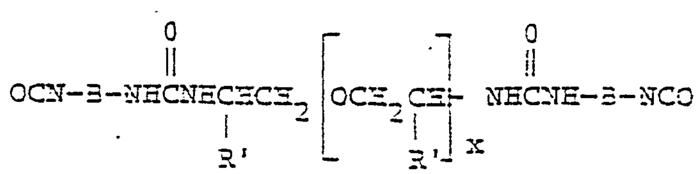

where R′ is hydrogen or methyl and x is a number having an average value of about 1 to 60.

11. A product according to claim 10 characterised in that the solvent is secondary butanol.

12. A product according to claim 10 and claim 11 characterised in that the diisocyanate reactant is methylene bis (cyclohexyl) diisocyanate.

13. A product according to claims 10 to claims 12 characterised in that said diisocyanates are allowed to react at 1:2 molar ratio.

14. A method of preparing a reaction product according to claims 9 to claims 12 characterised in that it comprises reacting a diisocyanate with at least a half of a mole equivalent of polyoxyalkylene diamine.

15. A coating prepared by reacting a reaction product according to claims 7 and 8 with a blocked isocyanate propolymer prepared from a polyol from trimethylolpropane, toluene diisocyanate or methyl ehtyl ketone oxime, in the presence of an organic solvent and at an elevated temperature.

16. A coating according to claim 15 characterised in that R′ is methyl and x has a value of 5 to 6.

17. A coating prepared by reacting a reacting product according to any of the claims 10 to 13 characterised in that the coatings are cured using polyoxyalkyleneamines and the hardness of coating can be varied by the use of different diisocyanates in the production of the polyoxyalkylene curing agent.

18. A blocked isocyanate prepolymer having an average molecular weight of about 600 to 10,000 characterised in that said prepolymer has been prepared by blocking a polyoxyalkyleneamine prepolymer with a blocking agent selected from phenols, amides, malonates, oximes, acetoacetates, and sodium bisulfite, or curing the product with a conventional polyamine.

19. A blocked isocyanate according to claim 19 characterised in that the choice of diisocyanate reactant in the prepolymer affects the hardness of the coating, said diisocyanate reactants being selected from isophorone diisocyanate, hexamethyl xylene diisocyanate, 1,6-hexamethylene diisocyanate, and methylene bis(cyclohexylisocyanate).

20. A product according to claim 18 characterised in that said blocked isocyanate prepolymer has the following structure:

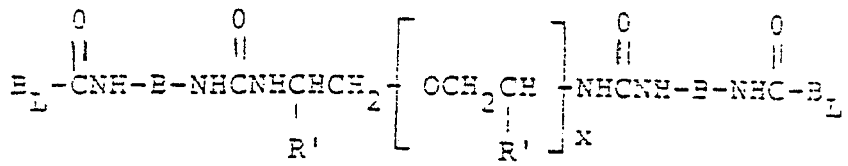

where R′ is methyl or hydrogen, B represents the alkyl nucleus structure from diisocyanates consisting of isophorone diisocyanate, 1,6-hexamethylene diisocyanate tetramethyl xylene diisocyanate, and methylene (cyclohexyl isocyanate), x is a number having an average value of about 1 to 60, $B_L$ is the nucleus structure derived from blocking agents consisting of methyl ethyl ketone oxime, phenols, amides, malonates, acetoacetates or sodium bisulfite.

21. A flexible polyurea coating possessing improved properties in the areas of storage stability and compatibility characterised in that it is prepared by reacting an urea-linked isocyanate prepolymer according to claim 20 and a polyoxyalkylene polyamine comprising JEFFAMINE[R] T-403.